# EUROPÄISCHE PATENTSCHRIFT

(11) **EP 1 386 411 B1**
(45) Veröffentlichungstag und Bekanntmachung des Hinweises auf die Patenterteilung: **20.07.2005**
(21) Anmeldenummer: 01943035.4
(22) Anmeldetag: 08.05.2001
(51) Int. Cl.: H04B 1/707

(54) **VERFAHREN ZUR DETEKTION VON MEHRWEGESIGNALEN**
METHOD FOR DETECTING MULTIPATH SIGNALS
PROCEDE DE DETECTION DE SIGNAUX A TRAJETS MULTIPLES

(43) Veröffentlichungstag der Anmeldung: 04.02.2004
(73) Patentinhaber: SIEMENS AKTIENGESELLSCHAFT, 80333 München (DE)
(72) Erfinder: BRAAM, Reinhold, 46414 Rhede (DE); IMHOF, Markus, 89077 Ulm (DE); LUDWIG, Mathias, 40822 Mettmann (DE)
(86) Internationale Anmeldenummer: PCT/DE2001/001740
(87) Internationale Veröffentlichungsnummer: WO 2002/091607

(56) Entgegenhaltungen:
- EP-A- 1 096 694
- WO-A-99/63677
- US-A- 5 648 983
- US-B1- 6 181 732

## Beschreibung

Die Erfindung betrifft ein Verfahren zur Detektion von Mehrwegesignalen, insbesondere zum Betrieb eines RAKE-Empfängers, gemäß Patentanspruch 1 und einen RAKE-Empfänger nach dem Oberbegriff von Patentanspruch 5.

In einem Mobilfunkkanal breiten sich Signale im allgemeinen über mehrere Wege aus (Multipathpropagation). Jedes einzelne Empfangssignal weist entsprechend seinem Ubertragungspfad eine unterschiedliche Laufzeit, Amplitude und Doppler-Verschiebung auf. Die verschiedenen Empfangssignale überlagern sich an der Antenne eines Empfängers entweder konstruktiv oder destruktiv und erschweren dadurch die Detektion der durch die Signale übertragenen Symbole.

Insbesondere ruft eine derartige Mehrwegeausbreitung eines Funksignals zeitlich gedehnte Kanalimpulsantworten hervor, die zu einem Delay-Spread und damit einem verschobenen zeitlichen Bezug der einzelnen Symbole des Übertragungssignals untereinander führen. In Mobilfunksystemen, die nach dem Wideband Code Devision Multiplex(W-CDMA)-Verfahren arbeiten, führt dies dazu, dass spezielle Empfänger (RAKE-Empfänger) zur Verarbeitung der Mehrwegesignale erforderlich sind.

Ein derartiger RAKE-Empfänger ermöglicht einen deutlichen Gewinn durch die Nutzung von Mehrwegesignalen, die mit unterschiedlichen Laufzeitverzögerungen an einer Empfangsantenne eines Mobilfunkgerätes eintreffen. Dazu wird das von der Antenne kommende Signal im Empfänger in mehreren Pfaden, den sogenannten "Fingern" des RAKE-Empfängers, verarbeitet. Jeder dieser Finger wird mit jeweils einer optimierten Phasenlage der Pseudo-Noise-Folgen, die zur Kodierung eines über den Mobilfunkkanal zu übertragenden Signals verwendet wurden, auf jeweils eine Komponente der empfangenen Mehrwegesignale eingestellt.

In einem IS-95-Mobilfunksystem besitzt ein RAKE-Empfänger einer Mobilstation mindestens drei und einer Basisstation mindestens vier solcher Finger. Ferner gibt es sowohl in der Mobilstation als auch in der Basisstation mindestens je einen "Suchfinger", der fortwährend nach stärkeren Mehrwegesignalen sucht. Sobald der Suchfinger ein stärkeres Mehrwegesignal entdeckt, wird der Finger des bisher schwächsten Mehrwegesignals auf das neue stärkere Mehrwegesignal optimal eingestellt. Typischerweise können damit in der Mobilstation bis zu drei und in der Basisstation bis zu vier der stärksten Mehrwegesignale mit einer Zeitverzögerung von mindestens 0,8 bis 1 µs demoduliert und mittels Maximum-Ratio-Combining kombiniert werden.

Besonders wichtig ist dabei eine exakte Detektion des zeitlichen Bezugs der einzelnen Mehrwegesignale zueinander, also die Feststellung der optimalen "Fingerposition". Daher erzeugt ein speziell abgestimmtes Filter, ein sogenanntes Matched-Filter, mit Hilfe einer im Empfänger bekannten Sequenz- bzw. Pilotfolge die Gesamt- oder Kanalimpulsantwort eines empfangenen Signals, anhand derer die Lage der einzelnen Finger bestimmbar ist. Allerdings lässt die Gesamtimpulsantwort nicht immer eine Detektion aller relevanten Fingerpositionen zu. Insbesondere wenn sich benachbarte Finger beispielsweise nur noch um eine sehr geringe Verzögerungszeit unterhalb der Chipdauer unterscheiden, ist eine sichere Detektion der Lage und der Anzahl der Finger schwierig.

Bekannte Verfahren zur Detektion der Fingerpositionen sind jedoch sehr rechenaufwendig, da sie eine Komplexität von O(N) besitzt, wobei N die Länge der Gesamtimpulsantwort ist.

Aus EP-A-1096694 ist zum Beispiel ein Verfahren bekannt, bei dem ein skaliertes Referenzsignal von der Gesamtimpulsantwort hintereinander abgezogen wird.

Aufgabe der vorliegenden Erfindung ist es daher, ein Verfahren zur Detektion von Mehrwegesignalen und einen entsprechenden RAKE-Empfänger vorzuschlagen, die eine gegenüber bekannten Detektionsverfahren geringere Komplexität der Datenverarbeitung und damit grundsätzliche kürzere Einstellzeiten sowie einen geringeren Bedarf an Prozessorkapazität aufweisen.

Diese Aufgabe wird durch ein Verfahren mit den Merkmalen von Patentanspruch 1 und durch einen RAKE-Empfänger mit den Merkmalen von Patentanspruch 5 gelöst. Bevorzugte Ausgestaltungen des Verfahrens ergeben sich aus den abhängigen Patentansprüchen.

Die der Erfindung zugrundeliegende Idee besteht darin, aus der Gesamtimpulsantwort nacheinander Peaks bzw. Maxima mittels Kreuzkorrelation zu bestimmen. Nach der Bestimmung eines ersten Maximums wird die Gesamtimpulsantwort um ein Referenzsignal, das zur Ermittlung des ersten Maximums mit der Gesamtimpulsantwort kreuzkorreliert wurde, vermindert. Dies bedeutet, dass Schritt für Schritt aus der Gesamtimpulsantwort mittels dem Referenzsignal Maxima bestimmt werden, die die mögliche Lage von Fingern angeben.

Demnach betrifft die Erfindung gemäß ihrem Verfahrensaspekt ein Verfahren zur Detektion von Mehrwegesignalen, insbesondere zum Betrieb eines RAKE-Empfängers, mit den folgenden Schritten:
a) Kreuzkorrelieren einer Gesamtimpulsantwort mit einem Referenzsignal,
b) Ermitteln und Speichern eines Maximums des Ergebnisses der Kreuzkorrelation und eines Proportionalitätsfaktors α,
c) (gegebenenfalls mehrfaches) Vermindern der Gesamtimpulsantwort um das mit α skalierte Referenzsignal und
d) Durchführen der Schritte a) bis c) mit der um das skalierte Referenzsignal verminderten Gesamtimpulsantwort, bis eine vorgegebene Anzahl von Maxima ermittelt ist oder der Skalierungsfaktor α einen vorgegebenen Wert unterschreitet.

Mit diesem Verfahren lassen sich in der Gesamtimpulsantwort enthaltene Signale auch dann erkennen, wenn sie nur sehr kurze Laufzeitunterschiede aufweisen, d. h. also zeitlich sehr nahe nebeneinander liegen. Ublicherweise führen derart geringe Laufzeitunterschiede zwischen zwei Signalen dazu, dass ein durch die Signale übertragener Impuls in einen Empfänger zeitlich gedehnt ankommt. Zur Detektion nahe beieinander liegender Impulse wie im Falle von Chips eines mittels CDMA übertragenen Signals ist dies jedoch sehr ungünstig. Das erfindungsgemäße Verfahren braucht zudem wesentlich weniger Rechenschritte als aus dem Stand der Technik bekannte Verfahren. Während die ersten beiden Iterationen zur Bestimmung bzw. Selektion der ersten beiden Maxima eine Komplexität von O(N) aufweisen, besitzen alle weiteren Iterationen nur noch eine Komplexität von O(E²), wobei E die Breite des Referenzsignals und N die Länge der Gesamtimpulsantwort ist.

Vorzugsweise wird das Verfahren in einem RAKE-Empfänger eingesetzt. Wie bereits erwähnt, werden RAKE-Empfänger insbesondere in Codemultiplex-Mobilfunksystemen eingesetzt. Ein RAKE-Empfänger nutzt im Prinzip die Laufzeitunterschiede von Mehrwegesignalen aus, indem er mehrere Pfade bzw. Finger aufweist, die jeweils auf die Phasenlage eines Signals der Mehrwegesignale eingestellt wird. Die in den einzelnen Pfaden bzw. Fingern des RAKE-Empfängers optimierten Signale werden dann zu einem gemeinsamen Empfangssignal kombiniert. Mit dem erfindungsgemäßen Verfahren kann die Funktionsweise eines RAKE-Empfängers deutlich verbessert werden, insbesondere bezüglich einer Gesamtimpulsantwort in der einzelne Signalanteile lediglich sehr kurze Laufzeitunterschiede (etwa ¼ Chip) besitzen.

Vorzugsweise ist das gemäß dem Verfahren genutzte Referenzsignal ein Fingerpattern, das einem typischen Mobilfunkkanal entspricht. Unter einem typischen Mobilfunkkanal wird hierbei ein Mobilfunkkanal verstanden, der begrenzte Laufzeitunterschiede aufgrund einer Mehrwegeausbreitung von übertragenen Signalen aufweist und eine gute Näherung für eine Vielzahl realer Mobilfunkkanäle darstellt.

Das Referenzsignal ist vorzugsweise derart skaliert, dass ein skaliertes Referenzsignal im wesentlichen mit dem in Schritt b) des Verfahrens ermittelten Maximum der Kreuzkorrelation übereinstimmt. Hierdurch wird die Effizienz von Schritt c) des Verfahrens deutlich verbessert.

In einer bevorzugten Ausführungsform des Verfahrens werden bei der Durchführung der Schritte a) bis d) im wesentlichen Multiply-and-Accumulate-Operationen durchgeführt. Diese Operationen verbessern die Effizienz des Verfahrens gegenüber den aus dem Stand der Technik bekannten Verfahren wesentlich, da eine Multiply-and-Accumulate-Operation mit deutlich weniger Rechenaufwand als die bei bekannten Verfahren erforderlichen Operationen Quadrieren, Addition, Subtraktion und Multiplikation durchgeführt werden kann.

Schließlich betrifft die Erfindung einen Empfänger zur Durchführung des Verfahrens, der mehrere Pfade bzw. Finger zur Verarbeitung von empfangenen Mehrwegesignalen aufweist. Erfindungsgemäß weist der Empfänger einen Kreuzkorrelator zum Kreuzkorrelieren einer Gesamtimpulsantwort mit einem Referenzsignal, einen Speicher für die Gesamtimpulsantwort und einen Skalierer und Subtrahierer zum Vermindern der Gesamtimpulsantwort um das Referenzsignal auf.

Vorzugsweise sind der Kreuzkorrelator, der Speicher und der Skalierer und Subtrahierer als Programmroutinen eines Programms für einen Signalprozessor zur Verarbeitung der Gesamtimpulsantwort oder als programmierbare oder fest verdrahtete Logik, insbesondere in einem ASIC, ausgebildet. Ein Signalprozessor weist spezielle Funktionen und/oder Befehle zur Signalverarbeitung auf und kann daher die vorgenannten Programmroutinen sehr effizient ausführen. Zudem ist ein solcher Signalprozessor mit einer sehr hohen Taktfrequenz betreibbar, um die auftretenden hohen Datenraten verarbeiten zu können. Die Implementierung in Logik besitzt den Vorteil, dass sie sehr schnell ist und daher noch höhere Datenraten verarbeiten kann.

Weitere Vorteile und Anwendungsmöglichkeiten der Erfindung ergeben sich aus der nachfolgenden Beschreibung eines Ausführungsbeispiels in Verbindung mit den Zeichnungen. Diese zeigen in
Fig. 1 anhand von Signalverläufen die Verarbeitung einer Gesamtimpulsantwort, die empfangene Mehrwegesignale aufweist, nach dem erfindungsgemäßen Verfahren,
Fig. 2 den beispielhaften Verlauf einer Kanal- bzw. Gesamtimpulsantwort eines Mobilfunkkanals,
Fig. 3 den Verlauf der virtuellen Kanal- bzw. Gesamtimpulsantwort des Mobilfunkkanals, dessen reale Gesamtimpulsantwort in Fig. 2 dargestellt ist,
Fig. 4 ein Suchmuster, das als Referenzsignal dient,
Fig. 5 einen weiteren beispielhaften Verlauf einer Gesamtimpulsantwort eines Mobilfunkkanals, der im wesentlichen drei Einzelimpulse und einen Rauschanteil aufweist,
Fig. 6 ein Ablaufdiagramm eines Ausführungsbeispiels des erfindungsgemäßen Verfahrens, und
Fig. 7 ein Blockschaltbild einer Ausführungsform des erfindungsgemäßen Empfängers.

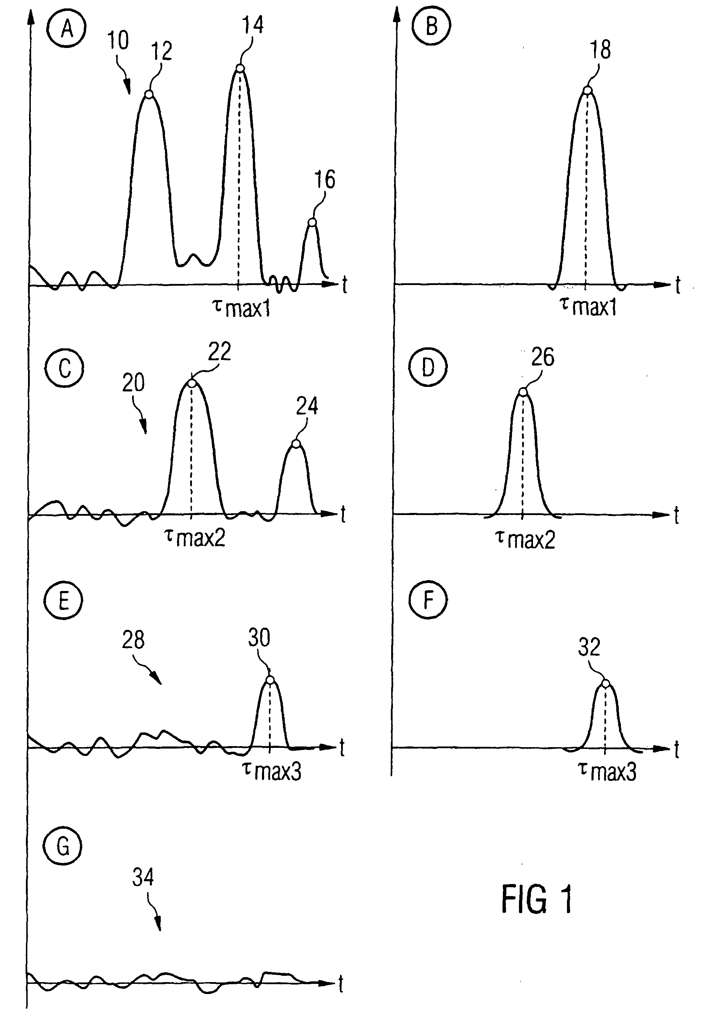

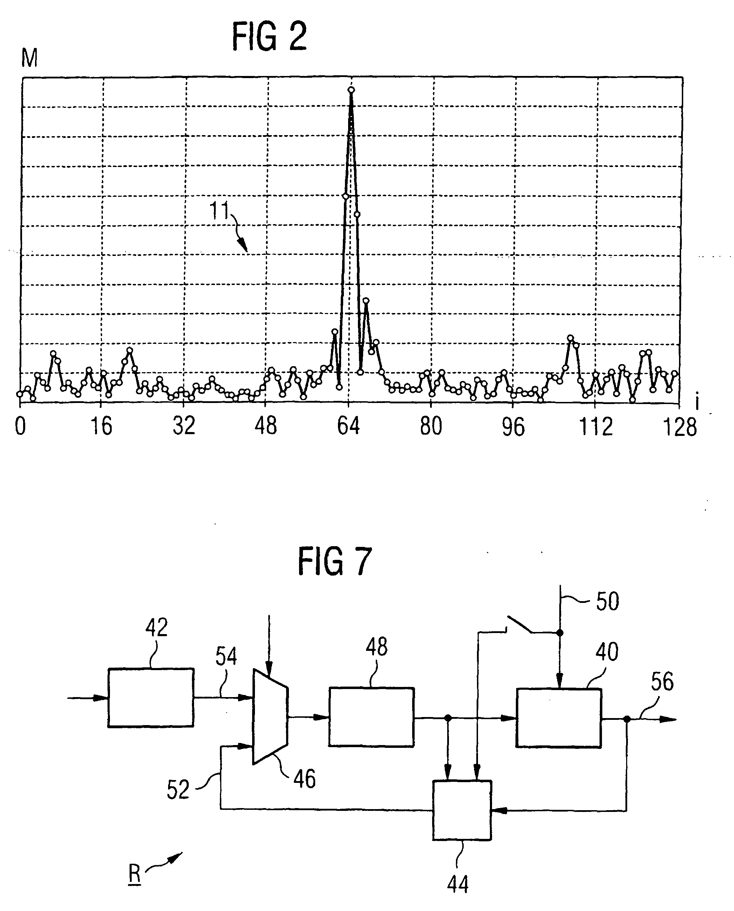

Anhand von Fig. 1 wird im folgenden kurze der prinzipielle Ablauf des erfindungsgemäßen Verfahrens an einem Ausführungsbeispiel verdeutlicht. Anschließend werden anhand der Fig. 2, 3, 4 und 5 beispielhafte Verläufe von Gesamtimpulsantwort und Suchmuster bzw. Referenzsignal erläutert.

In Fig. 1 ist in Diagramm A die Gesamtimpulsantwort 10.von empfangenen Mehrwegesignalen dargestellt. Die Gesamtimpulsantwort 10 weist im wesentlichen drei Maxima 12, 14 und 16 auf, die zu verschiedenen Empfangszeitpunkten auftreten. Mit dem erfindungsgemäßen Verfahren wird die Gesamtimpulsantwort 10 mit einem (nicht dargestellten) Referenzsignal kreuzkorreliert. Als Ergebnis der Kreuzkorrelation und Ermittlung eines Maximums und Skalierungsfaktors ergibt sich das in Diagramm B dargestellte Signal, das im wesentlichen ein dem Maximum 14 zum Zeitpunkt τₘₐₓ₁ im Diagramm A entsprechendes Maximum 18, ebenfalls zum Zeitpunkt τₘₐₓ₁, aufweist.

In einem nächsten Schritt wird die in Diagramm A dargestellte Gesamtimpulsantwort 10 um das skalierte Referenzsignal vermindert. Das Ergebnis dieser Subtraktion ist in Diagramm C von Fig. 1 dargestellt. Das in Diagramm C dargestellte Signal 20 weist nunmehr im wesentlichen zwei Maxima 22 und 24 auf. Das Maximum 22 zum Zeitpunkt τₘₐₓ₂ soll in einem nächsten Schritt aus dem Signal 20 bestimmt werden. Die Bestimmung wird wiederum mittels der Kreuzkorrelation nach dem erfindungsgemäßen Verfahren vorgenommen. Das Ergebnis der Kreuzkorrelation ist in Diagramm D dargestellt. Dieses zeigt ein Maximum 26 zum Zeitpunkt τₘₐₓ₂, das einem zweiten Signalanteil in der Gesamtimpulsantwort entspricht.

Das in Diagramm C dargestellte Signal 20 wird wiederum um das skalierte Referenzsignal vermindert, so dass das in Diagramm E dargestellte Signal 28 erhalten wird. Dieses weist im wesentlichen lediglich ein Maximum 30 zum Zeitpunkt τₘₐₓ₃ auf. Dieses Maximum entspricht einem dritten Signalanteil in der Gesamtimpulsantwort 10. Nach einer Kreuzkorrelation des in Diagramm E dargestellten Signals 28 mittels dem Referenzsignal und anschließender Bestimmung wird schließlich das in Diagramm F dargestellte Maximum 32 zum Zeitpunkt τₘₐₓ₃ erhalten.

In einem darauffolgenden Schritt wird wiederum das in Diagramm E dargestellte Signal 28 um das skalierte Referenzsignal vermindert, wodurch sich das in Diagramm G dargestellte Signal 34 ergibt. Dieses Signal 34 umfasst im wesentlichen nur noch Rauschanteile, so dass an dieser Stelle das erfindungsgemäße Verfahren zur Detektion von Mehrwegesignalen endet. Konkret bedeutet dies, dass die in den Diagrammen B, D und F dargestellten Maxima 18, 26 und 32 entsprechend unterschiedlichen Ausbreitungswegen und Laufzeiten im Mobilfunkkanal extrahiert worden sind.

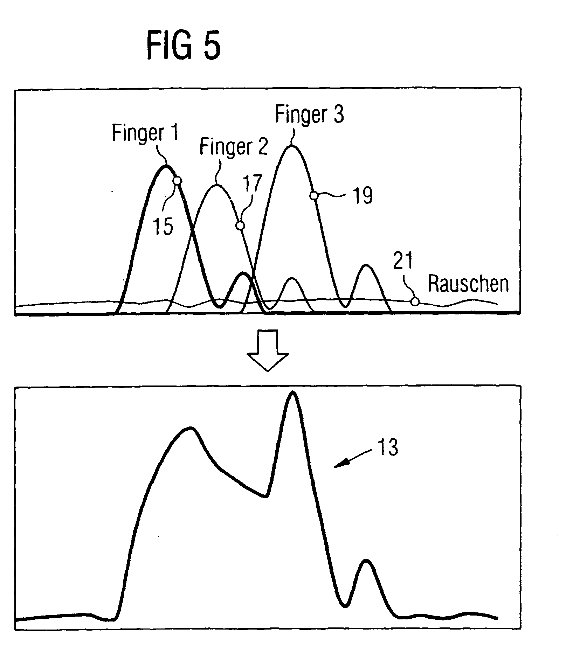

In Fig. 2 ist der beispielhafte Verlauf einer Gesamtimpulsantwort 11 nach Durchlaufen eines Matched-Filters in einem RAKE-Empfänger dargestellt. Auf der Abszisse ist der Abtastwert i entsprechend einem bestimmten Empfangszeitpunkt dargestellt. Die Gesamtimpulsantwort umfasst Signalanteile der verschiedenen Ausbreitungspfade in einem Mobilfunkkanal. In Fig. 5 ist beispielhaft dargestellt, wie sich eine derartige Gesamtimpulsantwort 13 aus der Überlagerung mehrerer Einzelimpulse 15, 17, 19 und einem Rauschanteil 21 zusammensetzt. Im oberen Diagramm in Fig. 5 ist der Rauschanteil 21 mit noise bezeichnet. Ferner sind drei Einzelimpulse 15, 17, 19 mit finger 1, finger 2 und finger 3 bezeichnet. Die Einzelimpulse entsprechen jeweils einem Ausbreitungspfad und treffen typischerweise zu unterschiedlichen Zeitpunkten in einem Empfänger an. Die sich aus dem Rauschanteil 21 noise und den drei Einzelimpulsen 15, 17, 19 finger 1 bis finger 3 zusammengesetzte Gesamtimpulsantwort 13 ist in dem unteren Diagramm dargestellt. Aufgabe des Empfängers ist es nun, aus dieser Gesamtimpulsantwort Startpunkte eines gesendeten Datenblocks zu ermitteln. Anhand dieser Startpunkte ist ein Empfang möglich. Die Startpunkte entsprechen Fingerpositionen, also im Prinzip den Empfangszeitpunkten der einzelnen Finger. Eine einfache Maximumsuche zur Ermittlung der Fingerpositionen in der Gesamtimpulsantwort ist jedoch sehr ungenau und führt zu einem schlechten Empfang. Entsprechend dem anhand von Fig. 1 geschilderten Ablauf wird in der Gesamtimpulsantwort nach einem Muster gesucht, das der Impulsantwort eines einzelnen Ausbreitungspfades im Mobilfunkkanal entspricht. Sobald dieses Muster gefunden ist, wird es von der Gesamtimpulsantwort subtrahiert. Dieser Vorgang wird solange wiederholt, bis keine nennenswerten Maxima in der fortlaufend verminderten Gesamtimpulsantwort mehr auftreten.

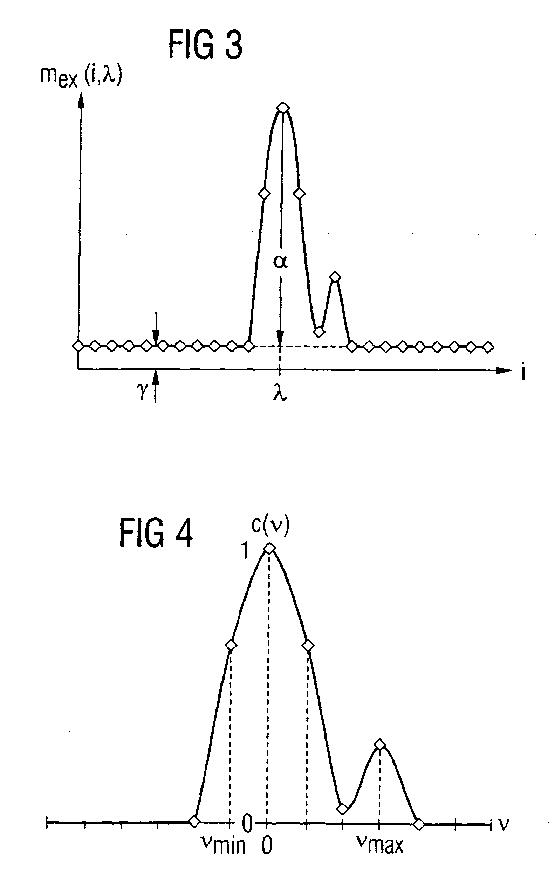

In Fig. 3 ist ein beispielhafter Verlauf einer virtuellen Gesamtimpulsantwort dargestellt. Diese virtuelle Gesamtimpulsantwort setzt sich aus einem in Höhe skalierbaren Suchmuster bzw. Referenzsignal und einer zusätzlichen Komponente γ zusammen. Das Suchmuster ist mit einem Skalierungsfaktor α skaliert. Die Komponente γ entspricht einer Rauschkomponente.

In Fig. 4 ist das in der virtuellen Gesamtimpulsantwort aus Fig. 3 enthaltene Suchmuster dargestellt. Ein Hauptmaximum des Suchmusters befindet sich bei υₘᵢₙ, ein Nebenmaximum bei υₘₐₓ.

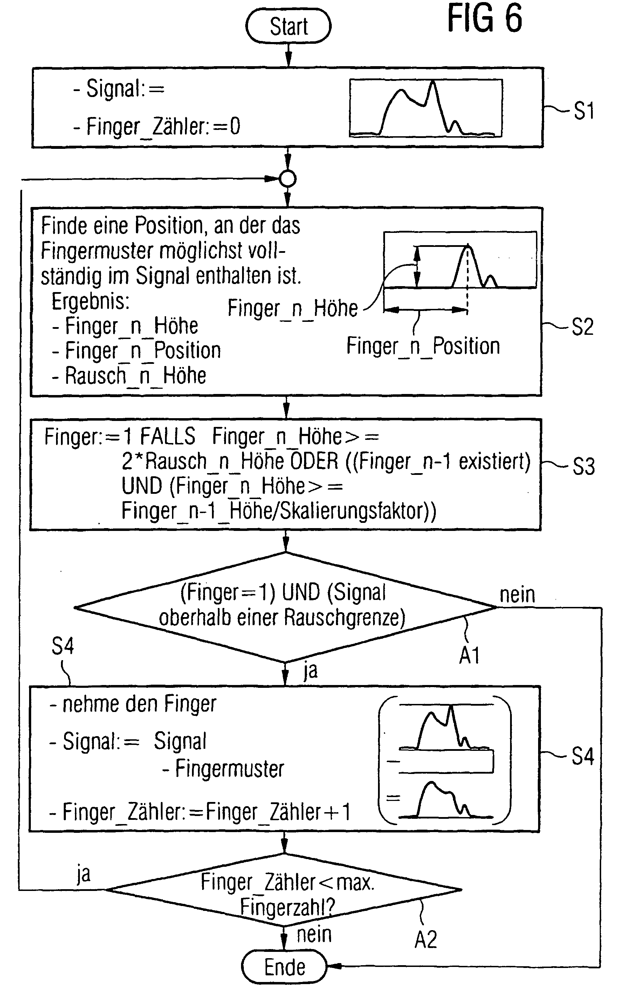

Das in Fig. 6 dargestellte Ablaufschema verdeutlicht, mit welchen Schritten aus einer Gesamtimpulsantwort die einzelnen Fingerpositionen erfindungsgemäß extrahiert werden. In einem ersten Schritt S1 wird die von einem Empfänger empfangene Impulsantwort eines Mobilfunkkanals einer Matched-Filterung unterzogen. Ein Fingerpositions-Zähler wird auf Null gesetzt. In einem zweiten Schritt S2 wird dann die Gesamtimpulsantwort mit einer Referenzfunktion kreuzkorreliert. Das Ergebnis der Kreuzkorrelation wird in einem dritten Schritt S3 verarbeitet. In diesem Schritt wird ein Maximum des Ergebnisses der Kreuzkorrelation sowie ein Proportionalitätsfaktor α festgestellt. In einem darauffolgenden Abfrageschritt Al wird überprüft, ob das Maximum ein Finger ist. Wird festgestellt, dass das Maximum kein Finger ist, ist das Verfahren beendet, da die "Rest-"Gesamtimpulsantwort nur noch Rauschanteile enthält. Anderenfalls wird in einem Schritt S4 das Maximum als festgestellte Fingerposition abgespeichert und die Gesamtimpulsantwort um das mit dem Proportionalitätsfaktor α skalierte Suchmuster bzw. Referenzsignal vermindert. Der Fingerpositions-Zähler wird zudem inkrementiert. Ein darauffolgender Abfrageschritt A2 prüft, ob der Wert des Fingerpositions-Zählers einen vorgegebenen Wert bereits überschritten hat. Der vorgegebene Wert entspricht einer vorgegebenen Anzahl von Maxima bzw. Fingerpositionen. Das Verfahren kann nämlich ab einer bestimmten Anzahl von Maxima bzw. Fingerpositionen abgebrochen werden. Typischerweise entspricht diese Anzahl von Maxima bzw. Fingerpositionen den "Fingern" eines RAKE-Empfängers. Ist jedoch der vorgegebene Wert noch nicht erreicht, wird das Verfahren mit dem Schritt S2 fortgesetzt.

Im folgenden wird kurz erläutert, wie das Suchmuster in der Gesamtimpulsantwort erkannt wird. Hierzu wird die Methode der kleinsten Fehlerquadrate angewandt. Konkret bedeutet dies, dass das Suchmuster in der Gesamtimpulsantwort genau da erkannt wird, wo die quadratische Abweichung der Gesamtimpulsantwort von der virtuellen Gesamtimpulsantwort (die nur einen Ausbreitungspfad aufweist) minimal ist. Dies wird im wesentlichen durch die Kreuzkorrelation erhalten. Anders ausgedrückt bedeutet dies, dass an der Stelle, an der die Kreuzkorrelation der Gesamtimpulsantwort mit dem Suchmuster bzw. dem Referenzsignal maximal ist, eine Fingerposition vorliegt. Besondere Bedeutung kommt dabei dem Proportionalitätsfaktor α zu. Die Gesamtimpulsantwort wird nämlich um das mit α skalierte Suchmuster bzw. Referenzsignal vermindert.

In Fig. 7 sind wesentliche Mittel eines Empfängers R zur Durchführung des erfindungsgemäßen Verfahrens dargestellt.

Der Empfänger R umfasst in diesem Sinne einen Kreuzkorrelator 40, einen Matched-Filter 42 und einen Subtrahierer und Skalierer 44. Ferner ist ein Multiplexer 46 vorgesehen, dessen Ausgangssignal einem Impulsantwortspeicher zugeführt wird.

Ein Datensignal, das über einen Mobilfunkkanal übertragen wurde, wird in dem Empfänger R dem Matched-Filter 42 zugeführt. Das Matched-Filter 42 dient zur Entzerrung des empfangenen Datensignals. Als Ausgangssignal liefert das Matched-Filter 42 die Gesamtimpulsantwort 54 des Mobilfunkkanals. Die Gesamtimpulsantwort 54 wird einem ersten Eingang eines Multiplexers 46 zugeführt. Über den Multiplexer 46 ist die Gesamtimpulsantwort 54 einem Impulsantwortspeicher 48 zuführbar. Dieser dient zur Zwischenspeicherung der Abtastwerte der Gesamtimpulsantwort. Das Ausgangssignal des Impulsantwortspeichers 48 wird dem Kreuzkorrelator 40 und dem Subtrahierer und Skalierer 44 zugeführt. Der Kreuzkorrelator 40 kreuzkorreliert die in dem Impulsantwortspeicher 48 gespeicherte Gesamtimpulsantwort mit einem zugeführten Referenzsignal 50. Das Ausgangssignal des Kreuzkorrelators 40, das ein Fingerpositions-Signal 56 ist, wird dem Subtrahierer und Skalierer 44 zugeführt. Diesem ist ferner über einen Schalter das Referenzsignal 50 zuführbar. Der Subtrahierer und Skalierer 44 skaliert zuerst das über den Schalter zugeführte Referenzsignal 50 entsprechend dem Fingerpositions-Signal 56. Dann vermindert er die zugeführte und im Impulsantwortspeicher 48 zwischengespeicherte Gesamtimpulsantwort um das skalierte Referenzsignal 50. Das Subtrahierungsausgangssignal 52 wird als zweites Eingangssignal dem Multiplexer 46 zugeführt.

Der RAKE-Empfänger R arbeitet wie folgt:

Ein über eine (nicht dargestellte) Antenne empfangenes Signal wird der üblichen Signal-Vorverarbeitung unterzogen und dem Matched-Filter 42 zugeführt. Das Ausgangssignal des Matched-Filters 42 ist die Gesamtimpulsantwort 54 und wird über den Multiplexer direkt in dem Impulsantwortspeicher 48 zwischengespeichert. Genauer gesagt speichert der Impulsantwortspeicher 48 Abtastwerte der Gesamtimpulsantwort 54. Die im Impulsantwortspeicher 48 zwischengespeicherte Gesamtimpulsantwort wird über den Korrelator 40 und den Subtrahierer und Skalierer 44 nach dem erfindungsgemäßen Verfahren verarbeitet. Nach der Verarbeitung wird der Multiplexer 46 auf den zweiten Eingang umgeschaltet, d. h. das Subtrahierungsausgangssignal 52 wird über den Multiplexer 46 in dem Impulsantwortspeicher 48 zwischengespeichert. Über eine (nicht dargestellte) Steuerung wird nun die in dem Impulsantwortspeicher 48 zwischengespeicherte Gesamtimpulsantwort solange nach dem erfindungsgemäßen Verfahren verarbeitet, bis entweder das Fingerpositions-Signal 56 keine neuen Fingerpositionen mehr anzeigt oder bereits eine vorgegebene Anzahl von Fingerpositionen ermittelt wurde. Dies kann beispielsweise durch einfaches Zählen der von dem Fingerpositions-Signal 56 signalisierten Fingerpositionen erfolgen.

Bezugszeichenliste
- 10, 11, 13: Gesamtimpulsantwort
- 12, 14, 16, 22, 24, 30: Maximum
- 15, 17, 19: Einzelimpulse
- 18, 26, 32: detektiertes Maximum
- 20, 28: Mehrwegesignale, um das Referenzsignal vermindert
- 21: Rauschanteil
- 34: Rauschsignale
- 40: Kreuzkorrelator
- 42: Matched-Filter
- 44: Subtrahierer und Skalierer
- 46: Multiplexer/Demultiplexer
- 48: Impulsantwortspeicher
- 50: Referenzsignal
- 52: Subtrahierungsausgangssignal
- 54: Gesamtimpulsantwort
- 56: Fingerpositions-Signal
- R: RAKE-Empfänger

## Patentansprüche

1. Verfahren zur Detektion von über einen Mobilfunkkanal empfangenen Mehrwegesignalen (10), insbesondere zum Betrieb eines RAKE-Empfängers, mit den folgenden Schritten:
a) Kreuzkorrelieren einer Gesamtimpulsantwort (10) mit einem Referenzsignal,
b) Ermitteln und Speichern eines Maximums (18) des Ergebnisses der Kreuzkorrelation und eines Proportionalitätsfaktors α,
c) Vermindern der Gesamtimpulsantwort (10) um das mit α skalierte Referenzsignal,
d) Durchführen der Schritte a) bis c) mit der um das skalierte Referenzsignal verminderten Gesamtimpulsantwort (10, 20, 28) bis eine vorgegebene Anzahl von Maxima (18, 26, 32) erhalten worden ist oder bis der Skalierungsfaktor α einen vorgegebenen Wert unterschreitet.

2. Verfahren nach Anspruch 1,
**dadurch gekennzeichnet, dass**
das Referenzsignal die fensterbegrenzte Impulsantwort eines Pfades des Mobilfunkkanals ist.

3. Verfahren nach Anspruch 1 oder 2,
**dadurch gekennzeichnet, dass**
das Referenzsignal derart skaliert ist, dass das skalierte Referenzsignal im wesentlichen mit dem in Schritt b) ermittelten Maximum der Kreuzkorrelation übereinstimmt.

4. Verfahren nach einem der vorhergehenden Ansprüche,
**dadurch gekennzeichnet, dass**
bei Durchführung der Schritte a) bis d) im wesentlichen Multiply-and-Accumulate-Operationen durchgeführt werden.

5. RAKE-Empfänger zur Durchführung des Verfahrens nach einem der vorhergehenden Ansprüche, der mehrere Pfade bzw. Finger zur Verarbeitung von empfangenen Mehrwegesignalen (10) aufweist,
**dadurch gekennzeichnet, dass**
- ein Kreuzkorrelator (40) zum Kreuzkorrelieren der Gesamtimpulsantwort (10) mit einem Referenzsignal (50),
- einen Speicher (48) für die Gesamtimpulsantwort und
- ein Subtrahierer und Skalierer (44) zum Vermindern der Gesamtimpulsantwort um das skalierte Referenzsignal vorgesehen sind.

6. RAKE-Empfänger nach Anspruch 5,
**dadurch gekennzeichnet, dass**
ferner eine Steuerungslogik zur Steuerung des Kreuzkorrelators (40) und des Subtrahierers und Skalierers (44) vorgesehen ist.

7. RAKE-Empfänger nach Anspruch 5 oder 6,
**dadurch gekennzeichnet, dass**
der Kreuzkorrelator (40), der Speicher (48) und der Subtrahierer und Skalierer (44) als Programmroutinen eines Programms für einen Signalprozessor zur Verarbeitung von Mehrwegesignalen oder als programmierbare oder fest verdrahtete Logik, insbesondere in einem ASIC, ausgebildet sind.

## Claims

1. Method for detection of multipath signals (10) which are received via a mobile radio channel, in particular for operation of a RAKE receiver, having the following steps:
a) cross-correlation of an overall impulse response (10) with a reference signal,
b) determination and storage of a maximum (18) of the result of the cross-correlation and of a proportionality factor α,
c) reduction of the overall impulse response (10) by the reference signal scaled by α,
d) carrying out steps a) to c) using the overall impulse response (10, 20, 28) reduced by the scaled reference signal until a predetermined number of maxima (18, 26, 32) have been obtained, or until the scaling factor α falls below a predetermined value.

2. Method according to Claim 1,
**characterized in that**
the reference signal is a window-limited impulse response of one path of the mobile radio channel.

3. Method according to Claim 1 or 2, **characterized in**
**that**
the reference signal is scaled such that the scaled reference signal essentially matches the cross-correlation maximum determined in step b).

4. Method according to one of the preceding claims,
**characterized in that**
multiply and accumulate operations are essentially carried out while carrying out steps a) to d).

5. RAKE receiver for carrying out the method according to one of the preceding claims, which has two or more paths or fingers for processing received multipath signals (10),
**characterized in that**
- a cross-correlator (40) is provided for cross-correlation of the overall impulse response (10) with a reference signal (50),
- a memory (48) is provided for the overall impulse response, and
- a subtractor and scalar (44) are provided in order to decrease the overall impulse response by the scaled reference signal.

6. RAKE receiver according to Claim 5,
**characterized in that**
control logic is also provided in order to control the cross-correlator (40) and the subtractor and scalar (44) .

7. RAKE receiver according to Claim 5 or 6,
**characterized in that**
the cross-correlator (40), the memory (48) and the subtractor and scalar (44) are in the form of program routines in a program for a signal processor for processing multipath signals, or are in the form of programmable or hard-wired logic, in particular in an ASIC.

## Revendications

1. Procédé de détection de signaux à trajets multiples (10) reçus par l'intermédiaire d'un canal de radiocommunication mobile, notamment pour le fonctionnement d'un récepteur RAKE, avec les étapes suivantes :
a) une réponse impulsionnelle globale (10) est intercorrélée avec un signal de référence,
b) un maximum (18) du résultat de l'intercorrélation et d'un facteur de proportionnalité α est déterminé et mémorisé,
c) la réponse impulsionnelle globale (10) est diminuée du signal de référence cadré avec α,
d) les étapes a) à c) avec la réponse impulsionnelle globale (10, 20, 28), diminuée du signal de référence cadré, sont exécutées jusqu'à ce qu'un nombre prédéterminé de maxima (18, 26, 32) ait été obtenu ou jusqu'à ce que le facteur de cadrage α devienne inférieur à une valeur prédéterminée.

2. Procédé selon la revendication 1,
**caractérisé par le fait que** le signal de référence est la réponse impulsionnelle, limitée à une fenêtre, d'un trajet du canal de radiocommunication mobile.

3. Procédé selon la revendication 1 ou 2,
**caractérisé par le fait que** le signal de référence est cadré de telle sorte que le signal de référence cadré coïncide sensiblement avec le maximum, déterminé à l'étape b), de l'intercorrélation.

4. Procédé selon l'une des revendications précédentes,
**caractérisé par le fait que**, lors de l'exécution des étapes a) à d), on exécute globalement des opérations de multipücation et addition.

5. Récepteur RAKE pour la mise en oeuvre du procédé selon l'une des revendications précédentes, qui comporte plusieurs trajets ou doigts pour le traitement de signaux à trajets multiples (10) reçus,
**caractérisé par le fait qu**'il est prévu
- un intercorrélateur (40) pour l'intercorrélation de la réponse impulsionnelle globale (10) avec un signal de référence (50),
- une mémoire (48) pour la réponse impulsionnelle globale, et
- un soustracteur et cadreur (44) pour diminuer du signal de référence cadré la réponse impulsionnelle globale.

6. Récepteur RAKE selon la revendication 5,
**caractérisé par le fait qu**'il est prévu en plus une logique de commande pour la commande de l'intercorrélateur (40) et du soustracteur et cadreur (44).

7. Récepteur RAKE selon la revendication 5 ou 6,
**caractérisé par le fait que** l'intercorrélateur (40), la mémoire (48) et le soustracteur et cadreur (44) sont conçus comme des routines d'un programme pour un processeur de signal destiné au traitement de signaux à trajets multiples ou comme une logique programmable ou câblée, notamment dans un ASIC.
